# EUROPEAN PATENT SPECIFICATION

(11) **EP 3 099 748 B1**
(45) Date of publication and mention of the grant of the patent: **22.08.2018**
(21) Application number: 15702837.4
(22) Date of filing: 30.01.2015
(51) Int. Cl.: C09D 7/00

(54) **COMPOSITION**
ZUSAMMENSETZUNG
COMPOSITION

(30) Priority: 31.01.2014 EP 14153521
(43) Date of publication of application: 07.12.2016
(73) Proprietor: Catexel Limited, London EC4A 3AE (GB)
(72) Inventor: DE BOER, Johannes Wietse, NL-2333 BD Leiden (NL); MAAIJEN, Karin, NL-2333 BD Leiden (NL); HAGE, Ronald, NL-2333 BD Leiden (NL)
(74) Representative: McNab, Donald C.
(86) International application number: PCT/GB2015/050220
(87) International publication number: WO 2015/114349

(56) References cited:
- EP-A1- 1 772 502
- WO-A1-2008/003652
- WO-A1-2013/045475
- WO-A2-2007/030389
- CN-A- 101 284 965
- US-A1- 2012 027 958

## Description

### FIELD

The present invention relates to an oxidatively curable coating composition with which a formulation for use in catalysing the curing of oxidatively curable coating compositions, in particular oxidatively curable coating compositions comprising an oxidatively curable alkyd-based resin, has been contacted. The formulations described herein comprise a triazacyclononane-based chelant; a manganese (II), (III) or (IV) salt; and an alcohol or ketone, which alcohol or ketone typically acts as a solvent for the salt and the chelant. The invention also relates to preparing the oxidatively curable coating compositions of the invention, such coating compositions once cured and methods comprising applying such coating compositions to a substrate.

### BACKGROUND

Alkyd resins are a well understood and dominant binder in many oxidatively curable paints and other solvent-based coatings. Alkyd emulsion paints, in which the continuous phase is aqueous, are also widely available commercially. Alkyd resins are produced by the reaction of polyols with carboxylic acids or anhydrides. To make them susceptible to what is commonly referred to as a drying process, some alkyd resins are reacted with unsaturated triglycerides or other source of unsaturation. Plant and vegetable oils, such as linseed oil, are frequently used as the source of triglycerides. In these drying processes, unsaturated groups, in particular carbon-carbon double bonds, can react with oxygen from the air, causing the oils to crosslink, forming a three-dimensional network, and harden. This oxidative curing process, although not drying, gives the appearance of drying and is often and herein referred to as such. The length of time required for drying depends on a variety of factors, including the constituents of the alkyd resin-containing composition and the amount and nature of the liquid continuous phase (e.g. solvent) in which the alkyd resin is formulated.

Film formation results from the autoxidation and polymerisation chemistries that occur during the drying of alkyd-based resins. It will proceed slowly in the absence of catalysis. However, it is customary to include in compositions of curable resins small, i.e. catalytic, quantities of optionally organic metal salts, often referred to as metal driers, which catalyse the polymerisation of unsaturated material so as to form the three-dimensional network.

Driers used for solvent-based coatings typically include alkyl carboxylates, typically C₆-C₁₈ carboxylates, of metals such as cobalt, manganese, lead, zirconium, zinc, vanadium, strontium, calcium and iron. Such metal carboxylates are often referred to as metal soaps. Redox-active metals, such as manganese, iron, cobalt, vanadium and copper, enhance radical formation, and thus the oxidative curing process, whilst so-called secondary driers (sometimes referred to as auxiliary driers), such as complexes based on strontium, zirconium and calcium, enhance the action of the redox-active metals. Often these soaps are based on medium-chain alkyl carboxylates such as 2-ethylhexanoate. The lipophilic units in such soaps enhance the solubility of the drier in solvent-based paints and other oxidatively curable coating compositions.

As well as metal soaps, a variety of metal driers that are redox metal complexes containing organic ligands can be used as driers, for example manganese complexes comprising 2,2'-bipyridine.

Whilst cobalt driers have been employed for many years as paint driers, there is a desire to develop alternatives, not least since cobalt soaps may in future need to be registered as carcinogenic materials. Iron- and manganese-based paint driers in particular have received considerable attention in recent years in the academic and patent literature as alternatives to cobalt-based driers. For some recent scientific publications addressing this topic in detail see publications by J H Bieleman (in Additives in Plastics and Paints, Chimia, 56, 184 (2002)); J H Bieleman (Marcomol. Symp., 187, 811 (2002)); and R E van Gorkum and E Bouwman (Coord. Chem. Rev., 249, 1709 (2005)).

WO 03/093384 A1 (Ato B.V.) describes the use of reducing biomolecules in combination with transition-metal salts or complexes based on pyrazoles, aliphatic and aromatic amines, 2,2'-bipyridine, 1,10'-phenanthroline and 1,4,7-trimethyl-1,4,7-triazacyclononane (Me₃TACN).

WO 03/029371 A1 (Akzo Nobel N.V.) describes the use of complexes comprising Schiff base compounds to enhance the drying of coatings, in which complexes at least one solubilising group is covalently bound to the organic ligand.

EP 1382648 A1 (Universiteit Leiden) describes the use of manganese complexes with acetylacetonate and bidentate nitrogen donor ligands in paint drying.

WO 2008/003652 A1 (Unilever PLC et al.) describes the use of tetradentate, pentadentate or hexadentate nitrogen ligands bound to manganese and iron as siccatives for curing alkyd-based resins.

Oyman *et al.* describe the oxidative drying of alkyd paints by [Mn₂(µ-O)₃(Me₃tacn)₂](PF₆)₂ (Z O Oyman et al., Surface Coating International Part B - Coatings Transaction, 88, 269 (2005)). WO 2011/098583 A1, WO 2011/098584 A1 and WO 2011/098587 A1 (each DSM IP Assets B.V.) describe the use of a variety of dinuclear manganese complexes with Me₃TACN as ligand for paint drying.

WO 2012/092034 A2 (Dura Chemicals, Inc.) describes the use of a transition metal and a porphyrin based ligand as a siccative for resin compositions.

WO 2013/92441 A1 and WO 2013/92442 A1 (both Akzo Nobel Coatings International B.V.) describe the use of mixtures of manganese salts and triazacyclononane-based chelants, having a chelant: manganese ion ratio of at least 1.25:1 and a manganese ion: chelant: ratio of at least 1.25:1 respectively.

The use of mixtures of metal salts and ligands to enhance the drying of paint compositions is known. For example, W H Canty, G K Wheeler and R R Myers (Ind. Eng. Chem., 52, 67 (1960)) describe the drying capability of a mixture of 1,10-phenanthroline (phen) and Mn soap, which is similar to that of prepared Mn-phen complexes. Mixtures of 2,2'-bipyridine (bpy) and manganese soaps show a better drying performance than manganese soaps without bpy (see P K Weissenborn and A Motiejauskaite, Prog. Org. Coat., 40, 253 (2000)). Also, R van Gorkum et al. (Inorg. Chem., 43, 2456 (2004)), describe that the addition of bpy to Mn(acetylacetonate)₃ gives an acceleration in the drying performance, and attribute this to the formation of manganese-bipyridine complexes. The use of manganese complexes with acetylacetonate and bidentate nitrogen donor ligands in paint drying has also been described in EP 1382648 A1 (Universiteit Leiden).

In WO 2012/093250 A1 (OMG Additives Limited) it is described that, by contacting an aqueous solution of transition metal ions and polydentate ligands with alkyd-based compositions, the resultant composition shows reduced skinning tendency as compared with the introduction of metal ions and polydentate ligands in nonaqueous media.

It may be inferred from the recent literature, including patent literature, published in the field of oxidatively curable coating compositions, for example from WO 2008/003652 A1, WO 2011/098583 A1, WO 2011/098584 A1, WO 2011/098587 A1 and WO 2012/092034 A2, that advantageous curing rates of oxidatively curable resins, for example alkyd-based resins, results from the use of metal driers comprising ligands that give rise to relatively stable transition metal-ligand complexes. In general, when using polydentate ligands, i.e. ligands that bind a metal ion through more than one donor site, improved stability of the resultant metal complexes in different redox states can be observed, as compared with the corresponding complexes where monodentate ligands are used.

In some cases, compositions contain metal driers that comprise well-defined transition metal ion-ligand complexes. In other cases, complexes are not well-defined. By a well-defined complex is meant herein (as the term is used customarily in the art) a complex that has been isolated such that it is susceptible to characterisation (i.e. definition) and analysis (e.g. to determine its structure and degree of purity). In contrast, a complex that is not well-defined is one that is prepared without isolation from the medium (e.g. reaction medium) in which it is prepared, and (generally) used, i.e. is generally prepared *in situ.*

In cases where metal drier-containing compositions comprise manganese ion-ligand complexes that are not-defined, these are generally formulated from a mixture of a ligand and a transition metal soap, particularly soaps comprising formulated in organic solvents, such as aliphatic hydrocarbons. Such solvents contribute to the environmental concentration of volatile organic compounds (VOCs). Owing to ever-increasing concern for the environment, and out of due regard to health and safety considerations, there is a societal desire to reduce the environmental concentration of VOCs. Furthermore, there is increasing evidence for the toxicity of one of the main soaps used, 2-ethyl-hexanoate. These considerations notwithstanding, the primary motivation behind the use of metal soaps is that such siccatives (i.e. drying catalysts) are typically added to an alkyd paint or other oxidatively curable coating composition, and these compositions are generally formulated in hydrophobic organic solvents.

There is a desire to formulate transition metal salts with different counterions, so as to try to avoid the use of soaps *per se* and/or to try to achieve a reduction in the use of VOCs. The present invention is intended to address these challenges.

### SUMMARY

We have surprisingly found that manganese salts containing particular counterions, such as small hydrophilic counterions, in combination with triazacyclononane-based chelants, formulated in an alcohol or ketone organic solvent, are effective for accelerating the curing of paints or other oxidatively curable coating compositions. Manganese salts containing small and hydrophilic anions, e.g. acetate, chloride, nitrate or sulfate, are not readily soluble in the organic and typically hydrophobic solvents in which paints and other oxidatively curable coating compositions are typically formulated. The invention provides the advantageous formulation of non-soap manganese salts and alcohol- or ketone-comprising solvent system not used hitherto for siccative formulations, but which formulations are nevertheless useful for accelerating the curing of oxidatively curable coating compositions, including hydrophobic solvent-based oxidatively curable coating compositions.

Viewed from a first aspect, therefore, the invention provides an oxidatively curable alkyd-based coating composition that has been contacted with a formulation obtainable by a method comprising contacting the following components:
(i) a manganese ion-containing salt, comprising a manganese ion having a valency of (II), (III) or (IV) and a counteranion selected from the group consisting of acetate, chloride, nitrate, formate, propionate, bromide, carbonate, acetylacetonate and sulfate;
(ii) a chelant of formula (I): 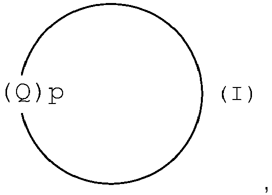 (wherein: 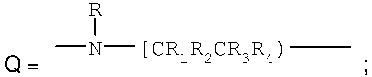
   p is 3;
   R is independently selected from the group consisting of hydrogen, C₁-C₂₄alkyl, CH₂CH₂OH, CH₂COOH and pyridine-2-ylmethyl; and
   R₁, R₂, R₃, and R₄ are independently selected from H, C₁-C₄alkyl and C₁-C₄alkylhydroxy); and
(iii) an alcohol or a ketone,
the method not comprising contact of the mixture resultant from contacting of the salt, the chelant and the alcohol or the ketone with hydrogen peroxide or a source thereof.

Viewed from a second aspect, the invention provides a method comprising contacting an oxidatively curable alkyd-based coating composition with a formulation as defined in accordance with the first aspect of the invention.

Viewed from a third aspect, the invention provides a method comprising applying the oxidatively curable coating composition of the first aspect of the invention, or obtainable according to the second aspect of the invention, to a substrate.

Viewed from a fourth aspect, the invention provides the oxidatively curable coating composition according to the first aspect of the invention, or obtainable in accordance with the second aspect of the invention, once cured.

Further aspects and embodiments of the present invention will be evident from the discussion that follows below.

### DETAILED DESCRIPTION

As summarised above, the present invention is based in part on the recognition that manganese salts containing small hydrophilic counterions in combination with triazacyclononane-based ligands, or chelants, of formula (I), formulated in organic solvents containing OH groups or oxo (also known as keto or ketone) groups, are useful in curing paints and other oxidatively curable coating compositions. This would not have been expected from the prior art.

The formulations useful in accordance with the first and second aspects of the invention are obtainable by contacting the components from which the formulation is prepared with each other, typically by stirring, sonication, vortexing or shaking, so as to form a mixture. The formulations may, and typically do, comprise only one type of each of these components, for example one chelant, one alcohol- or ketone-containing solvent, and one manganese salt. Alternatively, these formulations may be made from mixtures of two or more chelants; and/or two or more alcohols and/or ketones; and/or two or more types of manganese salt.

Each of these components, i.e. the chelant, the alcohol or ketone, and the manganese salt, is now described.

Firstly, the formulations useful in accordance with practice of the invention are made from a chelant of formula (I). By chelant is meant herein a chelating agent (used interchangeably herein with the term "chelant") capable of chelating at least one transition metal ion through two or more donor atoms, typically nitrogen atoms. The chelants present in the formulations described herein (which are also described herein as siccative formulations) are capable of chelating one manganese ion through the three nitrogen atoms of the 1,4,7-triazacyclononane motif of formula (I).

According to particular embodiments, each R is independently selected from the group consisting of hydrogen, C₁-C₂₄alkyl, CH₂COOH and pyridine-2-ylmethyl. According to other particular embodiments, each R is independently selected from the group consisting of hydrogen, C₁-C₂₄alkyl and pyridine-2-ylmethyl. According to still other particular embodiments, each R is independently selected from the group consisting of hydrogen and C₁-C₂₄alkyl. According to each of these groups of embodiments, a C₁-C₂₄alkyl group may be a C₁-C₆alkyl group. According to other, even more specific, embodiments, each R is independently selected from the group consisting of C₁-C₆alkyl. According to particular embodiments, including the groups of embodiments discussed in this paragraph, each R group is the same, typically C₁-C₆alkyl, in particular methyl.

According to further particular embodiments, specifically contemplating each of the particular embodiments described in the immediately preceding paragraph, R₁, R₂, R₃, and R₄ are independently selected from hydrogen and methyl, typically in which each R₁, R₂, R₃, and R₄ is the same, in particular embodiments of which each of R₁, R₂, R₃, and R₄ is hydrogen. According to particular embodiments of the invention, therefore, the chelant is thus 1,4,7-trimethyl-1,4,7-triazacyclononane (Me₃-TACN).

Without wishing to be bound to theory, whilst amines are often susceptible to aerial oxidation, the use of 1,4,7-triazacyclononane-based chelants described herein, i.e. of formula (I), is believed to be particularly advantageous since these cyclic triamines show a high stability towards aerial oxidation. This may be attributable to protonation of the 1,4,7-triazacyclononane moieties owing to their very high pKa values (of around 12-13). The protons may be provided by water or protic solvents present in formulations and compositions of the invention, or from moisture in the air. Moreover, the proton is bound/bridged to the three nitrogen donor atoms when the chelant is protonated because of the structure of the cyclic triamine, which confers still further stability (cf. P Chaudhuri and K Wieghardt, Prog. Inorg Chem., 35, 329 (1987)).

The chelants from which the formulations described herein are made can be introduced (i.e. contacted with the other components of the formulation) as free amines, or as protonated salts, such as those described elsewhere (see for example EP 0 902 021 A2 (Clariant GmbH)). The chelants can also be introduced as a solution, or a slurry/suspension in a solvent (for example an alcohol or a ketone).

Secondly, the formulations described herein are made from a manganese ion-containing salt. Such salts are typically simple manganese ion-containing salts, e.g. which consist of manganese ions of valency (II), (III) or (IV) and counteranions selected from the group consisting of acetate, chloride, nitrate, formate, propionate, bromide, carbonate, acetylacetonate and sulfate. By a simple manganese salt is meant a salt in which the cations comprise only manganese ions, i.e. the salt consists of manganese ions and anions (for example the counteranions defined herein). Such simple salts may be contrasted with the complex manganese ion-containing salts described elsewhere herein, for example those comprising complex cations that comprise complexes of manganese ions and triazacyclononane-based ligands, optionally with ligands bridging two manganese ions.

The counteranions of the manganese salt from which the formulations described herein are made are small hydrophilic counterions. According to some embodiments, the counteranions are selected from the group consisting of acetate, chloride, nitrate, formate, propionate, bromide, carbonate and acetylacetonate. Often these counteranions are selected from the group consisting of acetate, chloride and nitrate ions. According to particular embodiments, the counteranions are acetate ions.

The manganese cations can be of valency (II), (III) or (IV). For example, if present with a valency of (II), a manganese chloride salt will be included as MnCl₂. Typically, manganese salts having the counteranions defined herein will have manganese ions of valency (II) or (III). According to particular embodiments, the manganese ions are of valency (II).

The term hydrated is well known in the art. For example, metal salts often contain water molecules within a crystal lattice, which remain present in the lattice unless salts are subjected to specific drying steps, for example with heating and/or drying under reduced pressure. By optionally hydrated is thus meant that the manganese salts from which the formulations described herein are made may, or may not, comprise such water of crystallisation. Dehydrated manganese salts may thus be used in the preparation of the siccative formulations described herein. However, partially or fully hydrated metal salts can also be used. For example, manganese (II) acetate and manganese (II) chloride can be bought as tetrahydrate salts or as dehydrated salts.

Typically, the manganese salt from which the formulations described herein are prepared is selected from the group consisting of manganese(II) acetate, manganese(II) nitrate and manganese(II) chloride, which are optionally hydrated.

The manganese salt from which the formulations described herein are made can be introduced (i.e. contacted with the other components from which the formulation is made) as a solid, a suspension or as a solution in OH-containing and/or oxo-containing organic solvent. Without wishing to be bound by theory, *in situ* formation of manganese-chelant complexes is thought to take place upon contact of the manganese salt with the chelant.

Thirdly, the formulations described herein are made from (i.e. comprise) an alcohol or a ketone. As noted above, the formulation may comprise one or more alcohols and/or one or more ketones. Typically, however, out of convenience rather than out of necessity, the formulation is made from only one or more alcohol or one or more ketone. Even more typically, the formulation is made from only one alcohol or one ketone.

An intention behind the inclusion of the alcohol or ketone in the formulations described herein is that they act, at least partially, and preferably completely, to solubilise the chelant(s) and/or manganese salt(s) present in the formulations, at least at 20 °C. The alcohol and/or ketone is thus generally a liquid at this temperature. The alcohol or ketone serves in part to facilitate application of the desired dosage (i.e. quantity) of the manganese salt/chelant mixture to the paint or other oxidatively curable coating composition, the curing of which it is desired to accelerate. Complete dissolution, although advantageous, is not however required. For example, slurries of undissolved or incompletely dissolved chelant(s) and/ manganese salt(s) may be used. Nevertheless, such slurries will typically not be used, since these can lead to undesirably heterogeneous coating compositions according to the third to sixth aspects of the invention. Although the formulations described herein are generally solutions (at least at ambient temperature), alcohols or ketones with incompletely, that is to say imperfectly, dissolved chelant and/or manganese salt, as manifested by visible turbidity (i.e. a cloudy or opaque liquid with minute quantities of suspended matter), are of use according to the relevant aspects of the present invention. Without being bound by theory, it is believed that the effective curing of oxidatively curable coating compositions observed with the use of such turbid solutions may arise in part, from further (e.g. complete) dissolution of the manganese salt when the formulations described herein are contacted with, e.g. added to, oxidatively curable coating compositions in accordance with the second aspect of the invention.

The discussion of formulations useful in connection with the present invention herein focuses on solutions, for example by use of the word solvent to characterise the alcohol or ketone from which these formulations are prepared. However, although the formulations are typically solutions (at least at about 20 °C), the invention is not to be understood to be so limited.

The skilled person will be readily able to formulate useful solutions or other formulations of use in the invention by the mixing of appropriate quantities of alcohol or ketone, chelant and manganese salt. To achieve a desirable extent of dissolution, notably of the manganese salt, the alcohol or ketone will typically comprise from 1 to 6 carbon atoms, typically from 2 to 4 carbon atoms, it being understood that the minimum number of carbon atoms in a ketone is 3.

The alcohols or ketones used to make the formulations may contain water, typically arising from the alcohol or ketone being less than completely pure. For example, alcohols or ketones from which the formulations described herein may be made can comprise from 0 to 20 wt% of water. More typically, however, the water content of an alcohol or a ketone used to prepare formulations used in accordance with the invention is less than 10 wt% and still more typically less than 5 wt%. For example, an alcohol that may be useful is commercially available 96% v/v ethanol, in which the majority of the material that is not ethanol is water. Indeed, the large-scale production of most alcohols results in alcohols with water present in them.

By alcohol is meant herein, as the term is customarily used in the art, a compound comprising a saturated carbon atom substituted with a hydroxyl group. The term alcohol does not therefore include within its scope carboxylic acids and enols. As well as monools (alcohols having only one hydroxyl group), the term alcohol embraces polyhydric alcohols (also known as polyols), by which is meant alcohols comprising 2 or more, typically 2 or 3, hydroxyl groups in which no carbon atom bears more than one hydroxyl group. Typically, polyhydric alcohols are diols, polyhydric alcohols commonly known as glycols (for example propylene glycol), or triols (for example glycerol).

By ketone is meant herein, as the term is customarily used in the art, a compound comprising a carbonyl group, the carbon atom of which is attached to two carbon atoms. The term ketone does not therefore include within its scope aldehydes, esters, amides and the like. Although the carbon atoms to which the carbonyl group of the ketone is bonded need not be saturated, typically they are, and typically each is a small alkyl group, for example independently a methyl or an ethyl group.

Although it appears that alcohols function more effectively as solvents for the other components of the formulations described herein, ketones are also effective. Without being bound to theory, this possibly arises from *in situ* hydration with water present in either the ketone used, water of hydration in the manganese salt or otherwise, for example abstracted from the atmosphere or from being present in an oxidatively curable coating composition to which the formulations described herein have typically been contacted.

Examples of suitable ketones of use according to the invention include acetone and butan-2-one (sometimes referred to as methyl ethyl ketone (MEKO)).

Often, the formulations described herein comprise an alcohol but not a ketone. Where present, for example in those embodiments where a ketone is absent, the alcohol is, typically an alcohol selected from the group consisting of ethanol, 1-propanol, 2-propanol, 1-butanol, 2-butanol, 1,2-propyleneglycol, 1,3-propyleneglycol, and glycerol. More typically still, the formulations described herein comprise ethanol, 1,2-propyleneglycol, 1,3-propyleneglycol or glycerol.

It is to be understood that the formulations described herein are obtainable by contacting the three mandatory components thereof, *viz* the chelant; alcohol or ketone; and manganese salt. Once such formulations are formed, although they may be defined as comprising these components, it is considered more precise to describe the formulations as obtainable by contacting its three components with each other (analogously to the skilled person not generally understanding a solution resultant from mixing of solutions of hydrochloric acid and sodium hydroxide to "comprise" hydrochloric acid and sodium hydroxide). In particular, at least partial *in situ* formation of poorly defined complexes is suspected to take place upon contact of the components of the formulation, i.e. by reaction between the components from which the formulations described herein are obtainable. Thus, the chelant molecules from which the formulations described herein are prepared may or may not be part of a manganese complex, a characteristic of the formulations also affected by the stoichiometric relationship between the manganese salt and chelant from which the formulations are prepared.

In other words, the contacting of the components results in a mixture comprising species other than the components contacted. For example, complexes formed *in situ* may comprise manganese ions having a different oxidation state than the manganese ions from which the formulation was initially prepared. (The oxidation state of the manganese ions of the salt from which the formulations are prepared may also change upon storage of the formulation and/or upon contact of the formulations with oxidatively curable coating compositions in accordance with the second aspect of the invention and/or application of such an oxidatively curable coating composition to the substrate in accordance with the third aspect of the invention). Moreover, it may be possible to detect in the formulations ESR signals indicative of the presence of dimeric Mn(II)Mn(II) species (cf. A P Golombek and M P Hendrich J. Magn. Res., 2003, 165, 33-48 or J W de Boer, W R Browne, J Brinksma, P L Alsters, R Hage and B L Feringa, Inorg. Chem., 2007, 46, 6353-6372), even in the case where the formulation is not prepared from a manganese (II) salt. Indeed, it is believed and understood, without wishing to be bound by theory, that the siccative effect of the formulations described herein may be attributable to the formation of poorly defined complexes (i.e. complexes that are not well-defined).

The formulations described herein do not arise from methods in which mixtures resultant from contacting, for example mixing, the salt, the chelant and the alcohol of the ketone are contacted with hydrogen peroxide or a source thereof. The skilled person understands what is meant by the phrase a source of hydrogen peroxide, namely compounds, or mixtures of compounds that yield hydrogen peroxide. Examples include alkali peroxide, urea-hydrogen peroxide, sodium perborate and sodium percarbonate. Others will be evident to the skilled person. Adding hydrogen peroxide or a source thereof to mixtures of manganese salts, chelants and alcohols ketones is sometimes practised during the preparation of well-defined manganese ion-containing complexes.

According to particular embodiments of the first aspect of the invention, the formulations used to prepare the oxidatively curable coating compositions thereof are obtainable by a method consisting essentially of contacting with each other a manganese salt, a chelant, and an alcohol or a ketone. By this is meant that the method may comprise additional features, for example the inclusion of additional components or steps when preparing the formulations described herein (except, of course, the additional contract with hydrogen peroxide or a source thereof), provided that such features do not materially affect the essential characteristics of the formulations described herein.

Specifically, it will be understood that a notable essential characteristic of the formulation described herein is that it is of use as a siccative in the curing of oxidatively curable coating compositions. It follows, therefore, that the formulations described herein do not comprise a material amount of oxidatively curable material i.e. such that the formulations described herein are themselves oxidatively curable. Likewise, since the invention provides the advantageous formulation of non-soap manganese salts in alcohol or ketone solvents, it follows that the formulations described herein do not comprise a material amount of either a manganese soap or a material amount of a hydrocarbyl solvent, with which oxidatively curable coating compositions such as alkyd-based formulations are frequently formulated. Typical examples of hydrocarbyl solvents applied in solutions containing siccatives and/or in paint formulations include EXXSOL™ D40 and EXXSOL™ D60. Nevertheless, residual solvent, such as hexane or heptane, resultant from the manufacturing of the chelant may be present in the formulation. The weight ratio of chelant: solvent from the production process, where present, will typically be more than 1:1 (i.e. the weight of the chelant is more than the weight of the residual solvent), more typically more than 2:1 (i.e. the weight of chelant is more than twice as much as the weight of residual solvent), even more typically more than 3:1, and often more than 10:1. On the other hand, it will be understood from the foregoing discussion that the presence of water *per se* in the formulations does not materially affect the formulations' essential characteristics and is thus not excluded from formulations obtainable by a method consisting essentially of contacting a chelant, a manganese salt and an alcohol or a ketone with each other.

From the foregoing discussion, it is to be further understood that, according to particular embodiments of those embodiments of the formulations useful in accordance with the present invention just described, that is to say formulations obtainable by a method consisting essentially of contacting a chelant, a manganese salt and an alcohol or a ketone with each other, these formulations do not comprise either (i) oxidatively curable material or (ii) a transition metal ion soap (whether a manganese soap or otherwise (e.g. cobalt soap)). According to these embodiments, the formulations may comprise less than 1 wt% hydrocarbyl solvent, with respect to the weight of the formulation. Alternatively, these formulations do not comprise any of (i) oxidatively curable material, (ii) a transition metal ion soap (whether a manganese soap or otherwise (e.g. cobalt soap)) and (iii) a hydrocarbyl solvent.

According to yet more specific embodiments of those embodiments of the formulation just described - that is to say formulations obtainable by a method consisting essentially of contacting a chelant, a manganese salt and an alcohol or a ketone with each other, these formulations, including formulations that do not comprise oxidatively curable material, a transition metal ion soap (whether a manganese soap or otherwise (e.g. cobalt soap)) and optionally a hydrocarbyl solvent - other components may be present, such as water and inevitable impurities present in the components from which the formulation is prepared. For example, the formulations may comprise from 0 to 20 wt% of water. More typically, however, the water content of the formulations described herein is less than 10 wt% and still more typically less than 5 wt%. Moreover, it will be understood that formulations not comprising either (i) oxidatively curable material or (ii) a transition metal ion soap (whether a manganese soap or otherwise (e.g. cobalt soap)) may comprise inevitable residual quantities of residual solvent, such as hexane or heptane, resultant from the manufacturing of the chelant.

The formulations described herein are of particular use in accelerating the curing of oxidatively curable coating compositions, in accordance with the second aspect of the invention, by contacting a formulation described herein with an oxidatively curable coating composition, to provide an oxidatively curable coating composition in accordance with the first aspect of the invention.

By oxidatively curable coating compositions herein is meant liquids that form a continuous solid coating as a consequence of the course of oxidative reactions (curing) and generally evaporation of a liquid continuous phase (generally solvent). Typically, curing results in formation of cross-linkages and other bond formations through reactions involving unsaturated components within such compositions.

The oxidatively curable coating compositions of the invention are alkyd-based. As noted above, alkyd resins are a well-understood binder class used in film-forming coating compositions, which term is used herein interchangeably with oxidatively curable coating compositions.

The term coating composition is to be interpreted broadly and embraces, for example, varnishes, primary coats, filling pastes and glazes. Coating compositions may be solvent-based or water-based, e.g. emulsions. Typical coating compositions include solvent-based air-drying coatings and/or paints for domestic use.

According to particular embodiments of the present invention, the oxidatively curable coating compositions described herein are paints. The term paint as used herein means an oxidatively curable coating composition that comprises a pigment. For example, white paint generally comprises the pigment titanium dioxide. Often, coloured paints are provided, in which the colour is typically resultant from the use of a coloured pigment.

The compositions (including the fully formulated oxidatively curable coating compositions described herein) may comprise inks, for example a metal plate ink, lithographic ink, relief printing ink, screen ink or offset overprinting ink.

In alkyd-based oxidatively curable coating compositions, the major binder present is an alkyd. By binder is meant in the art and herein the film-forming (curable) component within oxidatively curable coating compositions, i.e. the component within the compositions that forms the desired three-dimensional network upon curing.

Typically, the curable component of an oxidatively curable composition (e.g. a composition according to the first aspect of the invention) will comprise between about 1 and about 98 % by weight, for example between about 1 and about 90% by weight of the total weight of the composition, e.g. between about 20 and about 70% by weight of the total weight of the composition. At least 50% by weight of the oxidatively curable portion (i.e. of the binder) in an oxidatively curable alkyd-based resin, i.e. from about 50% by weight to about 100% by weight, is curable alkyd resin. Typically, at least 75% by weight of the binder in an oxidatively curable alkyd-based resin, i.e. from about 75% by weight to about 100% by weight (e.g. from about 90% by weight to about 100% by weight), is curable alkyd resin. According to particular embodiments, about 100% by weight of the binder in an oxidatively curable alkyd-based resin is curable alkyd resin. The balance, if any, of the curable (i.e. binder) component may be, for example, curable acrylate, urethane, polybutadiene and epoxy ester resins. The skilled person is aware that introducing quantities of curable binders other than curable alkyds allows the distinct properties of such binders to be introduced to a controllable degree into the ultimate coating resultant from application of a composition, such as an oxidatively curable composition of the first aspect of the invention, or made according to the second aspect of the invention.

As described above, oxidatively curable alkyd resins are a well-understood and indeed dominant binder in many oxidatively curable paints (both for commercial and domestic use) and other coating compositions. They are employed, in particular, in solvent-based coating compositions.

Alkyds (used synonymously herein with alkyd resins) are produced by the condensation, typically polycondensation, of polyols with carboxylic acids or anhydrides. To make them susceptible to the so-called drying process, some alkyd resins (i.e. those that are oxidatively curable, present in the composition of the invention) are reacted with unsaturated triglycerides or other source of unsaturation. Plant and vegetable oils, such as linseed oil, are frequently used as the source of triglycerides. The term oxidatively curable alkyd resin thus generally refers in the art, and herein, to polyesters modified with fatty acids. As is known in the art, alkyd resins are generally prepared via condensation polymerisation reactions between three types of monomers: (i) one or more polyalcohols (also known as polyols), (ii) one or more polybasic acids (also known as polyacids); and (iii) long chain unsaturated fatty acids or triglyceride oils, which confer upon the alkyds the susceptibility towards curing.

Owing to its presence in naturally occurring oils, glycerol is a widely used polyol in the preparation of alkyds. Other examples of suitable polyhydric alcohols include: pentaerythritol, dipentaerythritol, ethylene glycol, diethylene glycol, propylene glycol, neopentyl glycol, trimethylol propane, trimethylol ethane, di-trimethylol propane and 1,6-hexane diol.

Polycarboxylic acids and the corresponding anhydrides, used to synthesise alkyds, comprise aromatic, aliphatic and cycloaliphatic components, which are generally derived from petrochemical feedstocks. Typical examples of such polyacids include: phthalic acid and its regio-isomeric analogues, trimellitic acid, pyromellitic acid, pimelic acid, adipic acid, azelaic acid, sebacic acid, maleic acid, fumaric acid and tetrahydrophthalic acid.

Suitable so-called drying and semi-drying fatty acids or mixture thereof, useful herein, are typically ethylenically unsaturated conjugated or non-conjugated C₂-C₂₄ carboxylic acids, such as oleic, ricinoleic, linoleic, linolenic, licanic acid and eleostearic acids or mixture thereof, typically used in the forms of mixtures of fatty acids derived from natural or synthetic oils.

By semi-drying and drying fatty acids is meant fatty acids that have the same fatty acid composition as the oils (i.e. the esters) from which they are derived. The classification of the oils is based on the iodine number: for a drying oil the iodine number is >140; for a semi-drying oil the iodine number is ranging between 125 and 140, and for a non-drying oil the iodine number is <125 (see "Surface Coatings", part 1, Chapman & Hall, London, page 55, 1993).

Typically, oxidatively curable alkyd-based coating compositions, both generally and according to the first aspect of the invention, are liquids. More typically still, such compositions are solvent-based, that is to say they comprise an organic solvent (which may be a mixture of solvents) for the binder.

In other words, "solvent-based" implies to the skilled person in this context compositions that are based on organic (i.e. non-aqueous) solvents, i.e. comprising an organic solvent as a liquid continuous phase. Examples of suitable solvents include aliphatic (including alicyclic and branched) hydrocarbons, such as hexane, heptane, octane, cyclohexane, cycloheptane and isoparaffins; aromatic hydrocarbons such as toluene and xylene; ketones, e.g. methyl ethyl ketone and methyl isobutyl ketone; alcohols, such as ethanol, secondary butanol, *iso*propyl alcohol, *n*-butyl alcohol and *n-*propyl alcohol, glycols such as propylene glycol; alcohol ethers and esters, glycol monoethers, such as the monoethers of ethylene glycol and diethylene glycol; monoether glycol acetates, such as 2-ethoxyethyl acetate; N-methylpyrrolidone; as well as mixtures thereof. Isomeric variants are included. Thus, for example, the term hexane embraces mixtures of hexanes. According to particular embodiments, the term hexane embraces mixtures of hexanes. According to particular embodiments of the invention, the solvent is a hydrocarbyl (i.e. hydrocarbon) solvent, e.g. an aliphatic hydrocarbyl solvent, e.g. solvents comprising mixtures of hydrocarbons. Examples include white spirit and solvents available under the trademarks Shellsol, from Shell Chemicals and Solvesso and Exxsol, from Exxon.

Whilst, according to many embodiments of the various aspects of the present invention, oxidatively curable coating compositions are solvent-based, water-based alkyd-based resin compositions and coating compositions are also well known and the compositions described herein may be water-based (i.e. comprise water as a continuous liquid phase). Accordingly, compositions described herein may be of alkyd-based resin compositions in the form of emulsions, and may thus comprise a suitable emulsifier, as is well known in the art.

When an alkyd-based or other oxidatively curable coating composition is referred to herein as "oxidatively curable", it is to be understood that this term is being used to describe a composition susceptible to the reactions that occur between unsaturated group-containing (e.g. carbon-carbon double bond-containing) compounds and oxygen from the air, which reactions constitute oxidative curing and are manifested in hardening and formation of solid coatings obtainable from such compositions. Thus, paints or other oxidatively curable coating compositions according to the present invention, are compositions capable of oxidative curing, but which have not yet been allowed to cure. In contrast, the composition of the fourth aspect of the invention is directed towards compositions after curing, i.e. when cured. The formation of the desired coating resultant from curing may be accelerated through the use of catalytic drying, which is achieved according to the present invention by the use of the formulations described herein. The curing of paints or other oxidatively curable coating compositions is typically slow or non-existent in the absence of suitable catalytic driers.

In complexes comprising the chelant of formula (I), the number of manganese ions per chelant molecule is 1. The typical molar ratio between the manganese ions of the manganese salt and chelant in the formulations described herein is between about 0.1:1 and about 10:1 (i.e. between about 0.1 and about 10), for example between about 0.3:1 and about 3:1 (i.e. between about 0.3 and about 3). Sometimes, the molar ratio between the chelant and the manganese ions will be between about 1:1.25 and 1.2:1 (i.e. between about 0.8 and about 1.2). Sometimes, the molar ratio between the chelant and the manganese ions will be approximately 1. However, this need not necessarily be the case. Without wishing to be bound to theory, a molar excess of manganese ions may be beneficial to allow some adsorption on solid particles present in oxidatively curable coating compositions, such as pigments and fillers, for example pigments and fillers selected from the group consisting of TiO₂, BaSO₄, talc, silica, Al₂O₃ and clays, without losing too much siccative activity. On the other hand, a molar excess of the chelant may be beneficial to improve regeneration of catalytically active species during curing, which can lead to improved drying (i.e. curing) performance despite using a lower quantity of manganese ions. Using a molar excess of the chelant can also be advantageous by reducing the intensity of coloured metal complexes. The skilled person will be able to take into account these considerations when preparing formulations of use according to the invention, depending on the ultimate use to which any given formulations are to be put, for example for use in a paint or other oxidatively curable coating composition.

The preferred quantity of manganese ions in the formulation to be applied to the paint or other oxidatively curable coating composition will, of course, depend on the constitution of the paint or other oxidatively curable coating composition and the amount of siccative formulation it is desired to contact with, e.g. add to, the paint or other oxidatively curable coating composition to attain the extent of acceleration of oxidative curing sought. The amount of manganese salt is often expressed as the weight of manganese ions with respect to the weight of the formulation (often expressed as wt%). Typically manganese ions will be present in an amount of between about 0.1 and about 10 wt%, more preferably between 0.3 and 3 wt%.

The typical amount of chelant in the formulations described herein (in wt%) will depend on both the amount of manganese ion and the desired molar ratio between chelant and manganese ion. For example, if the preferred chelant is 1,4,7-trimethyl-1,4,7-triazacyclononane, which has a molecular weight of 171 g/mol, if the level of manganese ion is 2 wt% in the formulation, and if the molar ratio between Mn and chelant is 1:1, the amount of 1,4,7-trimethyl-1,4,7-triazacyclononane in the formulation will be 2*171/55=6.2 wt%.

A manufacturer of a paint or other oxidatively curable alkyd-based resin composition can determine the optimum amount of manganese salt-chelant mixture as defined above, to contact with (e.g. add to) an oxidatively curable coating composition, e.g. an oxidatively curable alkyd-based coating composition. The optimal amount to be added may depend on the type of alkyd-resin used, other additives present, the amount of chelant with respect to manganese present, or the type of application. Typically, the desired level of manganese will be between 0.0001 and 0.3 wt%, with more typical levels between 0.0005 and 0.2 wt%, with more typical levels still between 0.001 and 0.1 wt%, for example levels of between 0.003 and 0.05 wt%, such as levels between 0.005 and 0.03 wt% (all with respect to the amount of oxidatively curable material in the composition).

Where percentages by weight with respect to oxidatively curable coating compositions are referred to herein (% by weight, wt % or % w/w), these mean, unless a context clearly dictates to the contrary, percentages by weight with respect to the binder component (i.e. the alkyd-based resin and any other binders present). With an oxidatively curable alkyd-based coating composition, for example, the combined weights of the binders are those with respect to which weight percentages herein concerning oxidatively curable coating compositions are based. For example, where a composition of the first aspect or made according to the second aspect of the invention typically comprises about 0.01% w/w manganese ions, this is with respect to the weight of the curable components of the composition (i.e. the weight of the binder(s)). Such concentrations of manganese ions in the presence of appropriate stoichiometries of the chelants of formula (I) described herein give useful catalytic enhancement of oxidative curing.

A formulation described herein or oxidatively curable coating composition of the invention can, and generally will, be used in the manufacture of a fully formulated oxidatively curable coating composition. According to the present invention, the term "fully formulated oxidatively curable coating composition" means, as will be understood by those of skill in the art, oxidatively curable compositions that comprise additional components over and above the binder (the oxidatively curable material, which is alkyd-based according to the present invention), an aqueous or non-aqueous solvent/liquid continuous phase and any metal driers intended to accelerate the curing process (herein provided by the siccative formulations described herein). Such additional components are generally included so as to confer desirable properties upon the coating composition, such as colour or other visual characteristics such as glossiness or mattness), physical, chemical and even biological stability (enhanced biological stability being conferred upon coating compositions by the use of biocides for example), or modified texture, plasticity, adhesion and viscosity.

For example, such optional additional components may be selected from solvents, antioxidants (sometimes referred to as antiskinning agents), additional siccatives (i.e. not comprising chelants of formula (I)), auxiliary driers, colourants (including inks and coloured pigments), fillers, plasticisers, viscosity modifiers, UV light absorbers, stabilisers, antistatic agents, flame retardants, lubricants, emulsifiers (in particular where an oxidatively curable coating composition of the invention is aqueous-based), anti-foaming agents, viscosity modifiers, antifouling agents, biocides (e.g. bactericides, fungicides, algaecides and insecticides), anticorrosion agents, antireflective agents, anti-freezing agents, waxes and thickeners. Typically, oxidatively curable coating compositions prepared in accordance with embodiments of the method of the second aspect of the invention will comprise at least an organic solvent, selected from the list of solvents described above (within the discussion of what "solvent-based" implies to the skilled person in the context of solvent-based oxidatively curable alkyd-based coating compositions) and a filler, and generally an antiskinning agent, in addition to the alkyd and optionally other binders and chelant present in the oxidatively curable coating composition of the invention. The skilled person is familiar with the incorporation of these and other components into oxidatively curable coating composition so as to optimise such compositions' properties.

It will be appreciated that some of these optional additional components possess more than one functional property. For example, some fillers may also function as colourants. The nature of any additional components and the amounts used may be determined in accordance with the knowledge of those of skill in the art and will depend on the application for which the curable coating compositions are intended. Examples are provided below but these are intended to be illustrative, not limitative.

When producing a fully formulated oxidatively curable coating composition that is, for example, a paint, one or more antioxidants (customarily referred to in the art as antiskinning agents) are often included to avoid premature curing of the oxidatively curable coating composition prior to its use. Such premature curing may be manifested by, for example, the formation of a skin on or lumpy matter in the oxidatively curable coating composition as a result of curing during storage, for example hardening of the surface of a paint layer in a can, owing to the activity of the siccative with oxygen on the oxidatively curable binder. Antiskinning agents are understood to reduce skinning by quenching radicals formed and/or by inactivation of drier catalysts by binding to one or more of the coordination sites. Examples include, but are not limited to, methylethylketoxime, acetonoxime, butyraldoxime, methyl-isobutylketoxime, 2-cyclohexylphenol, 4-cyclohexylphenol, t-butyl-hydroquinone, dialkylhydroxylamine, acetylacetonate, ammonia, vitamin E (tocopherol), hydroxylamine, triethylamine, dimethylethanolamine, 2-t-butyl-4-methylphenol, and 2-[(1-methylpropyl)amino]ethanol. According to particular embodiments, the antiskinning agent is selected from the group consisting of methylethylketone-oxime, acetonoxime, butyraldoxime, dialkylhydroxylamine, ammonia, hydroxylamine, triethylamine, dimethylethanolamine, o-cyclohexylphenol, p-cyclohexylphenol and 2-t-butyl-4-methylphenol.

The quantity of antiskinning agent present in an oxidatively curable coating composition is typically between about 0.001 and about 2.5 wt%. The antioxidant or antiskinning agent may be contacted with, e.g. added to, an oxidatively curable alkyd-based resin coating composition, together with (or separately from) a siccative formulation described herein prior to or during the preparation of a fully formulated oxidatively curable coating composition (for example a paint or other coating composition).

Colourants include pigments and inks. Titanium dioxide is a pigment commonly included in many coating compositions, in particular paints.

Fillers may be added to an oxidatively curable coating composition for a number of reasons, for example to bulk out the coating composition and/or to compare particular properties on the cured composition. Typically, fillers will be inorganic solids that are generally introduced in particulate (finely divided) form. Examples include silica, silicates or clays (for example mica, talc, kaolin), carbonate or other minerals and metal salts or oxides (such as marble, quartzite). Other suitable fillers will be evident to the skilled person.

It is also within the scope of the current invention for a paint manufacturer, for example, to add other commercial metal-soap/chelant mixtures to an oxidatively curable coating composition of the invention, such as the non-limiting example of Borchers® Dry 0410 (a mixture of 2,2'-bipyridine (bpy) with Mn(neodecanoate)₂ commercially available from OMG), as a mixture of bpy with Mn(neodecanoate)₂.

Additionally, one or more auxiliary driers may be added to a fully formulated oxidatively curable coating composition. Such auxiliary driers include fatty acid soaps of zirconium, bismuth, barium, cerium, calcium, lithium, strontium, and zinc. Typically, fatty acid soaps are optionally substituted octanoates, hexanoates and naphthenates. Without being bound by theory, auxiliary driers (sometimes referred to as through driers) are generally understood to diminish the effect of adsorption of the main drier on solid particles often present in an oxidatively curable coating composition. Other non-metal based auxiliary driers may also be present if desired. These may include, for example, thiol compounds, as described in US 2001/0008932 A1 (Bakkeren et al.*)* or biomolecules as described in US 2005/0245639 A1 (Oostveen et al.). Concentrations of auxiliary driers within oxidatively curable coating compositions are typically between about 0.01 wt% and 2.5 wt% as is known in the art.

The oxidatively curable coating compositions of the invention (including the fully formulated oxidatively curable coating compositions described herein) may be used as a decorative coating for a natural or synthetic substrate. For example, these may be applied to wood substrates, such as door or window frames, or for other substrates such as those made of synthetic materials (such as plastics including elastomeric materials), concrete, leather, textile, glass, ceramic or metal, in accordance with the third aspect of the invention. The thus-applied composition may then be allowed to cure. In this respect, the fourth aspect of the invention is directed towards a composition according to the first aspect of the invention, or obtainable according to the second aspect of the invention, when cured.

Each and every patent and non-patent reference referred to herein is hereby incorporated by reference in its entirety, as if the entire contents of each reference were set forth herein in its entirety.

The invention may be further understood with reference to the following non-limiting clauses:
1. An oxidatively curable alkyd-based coating composition that has been contacted with a formulation obtainable by a method comprising contacting the following components:
   (i) a manganese ion-containing salt, comprising a manganese ion having a valency of (II), (III) or (IV) and a counteranion selected from the group consisting of acetate, chloride, nitrate, formate, propionate, bromide, carbonate, acetylacetonate and sulfate;
   (ii) a chelant of formula (I): 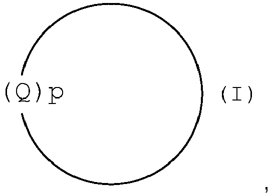 (wherein: 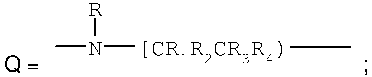
      p is 3;
      R is independently selected from the group consisting of hydrogen, C₁-C₂₄alkyl, CH₂CH₂OH, CH₂COOH and pyridine-2-ylmethyl; and
      R₁, R₂, R₃, and R₄ are independently selected from H, C₁-C₄alkyl and C₁-C₄alkylhydroxy); and
   (iii) an alcohol or a ketone,
   the method not comprising contact of the mixture resultant from contacting of the salt, the chelant and the alcohol or the ketone with hydrogen peroxide or a source thereof.
2. The composition of clause 1, wherein the manganese ion has a valency of (II) or (III).
3. The composition of clause 1, wherein the manganese ion has a valency of (II).
4. The composition of any one preceding clause, wherein the counteranion is selected from the group consisting of acetate, chloride, nitrate, formate, propionate, bromide, carbonate and acetylacetonate.
5. The composition of any one preceding clause, wherein the counteranion is selected from the group consisting of acetate, chloride and nitrate.
6. The composition of any one preceding clause, wherein the counteranion is acetate.
7. The composition of clause 1, wherein the salt is selected from optionally hydrated Mn(II)(acetate)₂, Mn(II)Cl₂ and Mn(II)(NO₃)₂.
8. The composition of any one preceding clause, wherein manganese ions are present in the formulation in an amount of about 0.1 to about 10 wt%.
9. The composition of any one preceding clause, wherein manganese ions are present in the formulation in an amount of about 0.3 to about 3 wt%.
10. The composition of any one preceding clause, wherein each R is independently selected from the group consisting of hydrogen, C₁-C₂₄alkyl and pyridine-2-ylmethyl.
11. The composition of clause 10, wherein each R is independently C₁-C₂₄alkyl.
12. The composition of clause 10, wherein each R is independently selected from the group consisting of C₁-C₆alkyl.
13. The composition of any one preceding clause, wherein each R group is the same.
14. The composition of clause 13, wherein each R group is methyl.
15. The composition of any one preceding clause, wherein each R₁, R₂, R₃, and R₄ is hydrogen or methyl.
16. The composition of clause 15, wherein each of R₁, R₂, R₃, and R₄ is hydrogen.
17. The composition of any one preceding clause, wherein the chelant is 1,4,7-trimethyl-1,4,7-triazacyclononane.
18. The composition of any one preceding clause, wherein the molar ratio of manganese ions to chelant in the formulation is between about 0.1 and about 10.
19. The composition of clause 18, wherein the molar ratio of manganese ions to chelant in the formulation is between about 0.3 and about 3.
20. The composition of clause 18, wherein the molar ratio of manganese ions to chelant in the formulation is between about 0.8 and about 1.2.
21. The composition of clause 18, wherein the molar ratio of manganese ions to chelant in the formulation is about 1.
22. The composition of any one preceding clause, wherein the formulation is obtainable by a method consisting essentially of contacting the salt, the chelant and the alcohol and/or ketone with each other.
23. The composition of any one preceding clause, wherein the formulation does not comprise any oxidatively curable material.
24. The composition of any one preceding clause, wherein the formulation does not comprise a manganese soap.
25. The composition of any one preceding clause, wherein the formulation does not comprise a cobalt soap, a manganese soap, a lead soap, a zirconium soap, a zinc soap, a vanadium soap, a strontium soap, a calcium soap or an iron soap.
26. The composition of any one preceding clause, wherein the formulation comprises less than 1 wt% hydrocarbyl solvent.
27. The composition of any one preceding clause, wherein the formulation does not comprise a hydrocarbyl solvent.
28. The composition of any one preceding clause, wherein the formulation comprises between 0 and 20 wt% water.
29. The composition of any one preceding clause, wherein the formulation comprises an alcohol.
30. The composition of clause 29, wherein the alcohol comprises from 1 to 3 hydroxyl groups.
31. The composition of clause 30, wherein the alcohol is selected from the group consisting of methanol, ethanol, glycerol, 1-propanol, 2-propanol, 1-butanol, 2-butanol, 1,2-propyleneglycol and 1,3-propyleneglycol.
32. The composition of clause 31, wherein the alcohol is selected from the group consisting of ethanol, 1,2-propyleneglycol, 1,3-propyleneglycol and glycerol.
33. The composition of any one preceding clause, wherein the formulation does not comprise a ketone.
34. The composition of any of clauses 1 to 32, wherein the formulation comprises a ketone.
35. The composition of clause 34, wherein the ketone is selected from the group consisting of acetone and 2-butanone.
36. The composition of any one preceding clause, wherein the formulation is a solution at about 20 °C.
37. The composition of any one preceding clause, which is a paint.
38. The composition of any one preceding clause, wherein between about 90% by weight and about 100% by weight of curable binder in the composition is oxidatively curable alkyd resin.
39. The composition of any one preceding clause, which comprises between about 0.0001 and about 0.3 wt% manganese ions with respect to the weight of curable components in the composition.
40. The composition of clause 39 which comprises between about 0.0005 and about 0.2 wt% manganese ions with respect to the weight of curable components in the composition.
41. The composition of clause 40, which comprises between about 0.001 and about 0.1 wt% manganese ions with respect to the weight of curable components in the composition.
42. The composition of clause 41, which comprises between about 0.003 and about 0.05 wt% manganese ions with respect to the weight of curable components in the composition.
43. The composition of clause 42, wherein the amount of manganese ions is between 0.005 and 0.03 wt% with respect to the weight of curable components in the composition.
44. A method comprising contacting an oxidatively curable alkyd-based coating composition with a formulation as defined in any one of clauses 1 to 36.
45. A method comprising applying an oxidatively curable coating composition as defined in any one of clauses 1 to 43, or obtainable according to the method of clause 44, to a substrate.
46. The method of clause 45, wherein the substrate is or comprises wood, a plastics material, concrete, leather, textile, glass, ceramic or metal.
47. An oxidatively curable coating composition as defined in any one of clauses 1 to 43, or obtainable according to the method of clause 44, once cured.

The non-limiting examples below more fully illustrate the embodiments of this invention.

### EXPERIMENTAL

Me₃-TACN (1,4,7-trimethyl-1,4,7-triazacyclononane) (95%) is a product of Catexel Ltd and was obtained as disclosed elsewhere (see US patent number 5,284,944 (Madison et al.). The chelant 1,2-bis-(4,7,-dimethyl-1,4,7,-triazacyclonon-1-yl)-ethane (Me₄-DTNE) (purity level of 92.4% w/w) was obtained as disclosed in WO 2012/003712 (Unilever PLC et al.). Examples described herein in which Me₄-DTNE is used are presented not as embodiments of the invention but as examples which are useful for understanding the invention. Alkyd resin (catalogue number A/1552/15; an alkyd resin solution of 70 wt% in white spirits) was obtained from Acros Organics. Manganese (II) 2-ethylhexanoate (abbreviated as Mn(2-EH)₂ below; catalogue number 93-2532; 40% solution in mineral spirits, 6wt% Mn) was obtained from Strem Chemicals. Manganese(II) acetate tetrahydrate (abbreviated as Mn(OAc)₂.4H₂O), manganese(III) acetate dihydrate (abbreviated as Mn(OAc)₃.2H₂O) and manganese(II) nitrate tetrahydrate (abbreviated as Mn(NO₃)₂.4H₂O) were obtained from Aldrich. Manganese chloride tetrahydrate (abbreviated as MnCl₂.4H₂O) was obtained from Fluka. Propylene glycol, ethanol (96%), 1-propanol, 2-butanone and methanol were obtained from Merck. 2-propanol, iso-butanol and acetone were obtained from VWR/Prolabo. Glycerol was obtained from Sigma-Aldrich. Shellsol D60 was obtained from Caldic Nederland.

### Experiment 1a

55.7 mg Mn(OAc)₂.4H₂O and 46.4 µL Me₃-TACN were dissolved in 5 mL propylene glycol. 400 µL of this solution was added to 5 g of alkyd resin and stirred manually. This led to a Mn level of 0.03 wt% with respect to the solid resin and a 1:1 molar ratio Mn:Me₃-TACN. The next day, 150 mg of the resin solution was spread evenly on 10 cm² of a glass plate. Dryness of the film was determined every 30 minutes by running a needle through the film. 'Dry' was defined when the needle could no longer run through the film, but gave wrinkling of the film's surface.

### Experiment 1b

The same experiment as described above (experiment 1a) was done, except now 200 µL of the Mn(OAc)₂.4H₂O - Me₃-TACN in propylene glycol solution was added to 5 g of alkyd resin. This led to a Mn level of 0.014wt% with respect to the solid resin.

### Experiment 1c

The same experiment as described above (experiment 1a) was done, except now 100 µL of the Mn(OAc)₂.4H₂O - Me₃-TACN in propylene glycol solution was added to 5 g of alkyd resin. This led to a Mn level of 0.007wt% with respect to the solid resin.

### Experiment 1d

61.0 mg Mn(OAc)₃.2H₂O and 46.4 µL Me₃-TACN were dissolved in 5 mL propylene glycol. 400 µL of this solution was added to 5 g of alkyd resin and stirred manually. This led to a Mn level of 0.03wt% with respect to the solid resin and a 1:1 molar ratio Mn:Me₃-TACN. The next day, 150 mg of the resin solution was spread evenly on 10 cm² of a glass plate. Dryness of the film was determined every 30 minutes by running a needle through the film. 'Dry' was defined when the needle could no longer run through the film, but gave wrinkling of the film's surface.

### Experiment 1e

The same experiment as described above (experiment 1d) was done, except now 200 µL of the Mn(OAc)₃.2H₂O - Me₃-TACN in propylene glycol solution was the added to 5 g of alkyd resin. This led to a Mn level of 0.014wt% with respect to the solid resin.

### Experiment 1f

The same experiment as described above (experiment 1d) was done, except now 100 µL of the Mn(OAc)₃.2H₂O - Me₃-TACN in propylene glycol solution was added to 5 g of alkyd resin. This led to a Mn level of 0.007wt% with respect to the solid resin.

### Experiment 1g

45.0 mg MnCl₂.4H₂O and 46.4 µL Me₃-TACN were dissolved in 5 mL propylene glycol. 200 µL of this solution was added to 5 g of alkyd resin and stirred manually. This led to a Mn level of 0.014wt% with respect to the solid resin and a 1:1 molar ratio Mn:Me₃-TACN. The next day 150 mg of the resin solution was spread evenly on 10 cm² of a glass plate. Dryness of the film was determined every 30 minutes by running a needle through the film. 'Dry' was defined when the needle could no longer run through the film, but gave wrinkling of the film's surface.

### Experiment 1h

The same experiment as described above (experiment 1g) was done, except now 57.1 mg of Mn(NO₃)₂.4H₂O was used instead of MnCl₂.

### Experiment 1i

55.7 mg Mn(OAc)₂.4H₂O and 92.6 µL Me₃-TACN were dissolved in 5 mL propylene glycol. 100 µL of this solution was added to 5 g of alkyd resin and stirred manually. This led to a Mn level of 0.007wt% with respect to solid resin and a 1:2 molar ratio Mn:Me₃-TACN. The next day 150 mg of the resin solution was spread evenly on 10 cm² of a glass plate. Dryness of the film was determined every 30 minutes by running a needle through the film. 'Dry' was defined when the needle could no longer run through the film, but gave wrinkling of the film's surface.

### Experiment 1j

The same experiment as described above (experiment 1i) was done, except now 232.0 µL Me₃-TACN was used. This led to a 1:5 molar ratio Mn:Me₃-TACN.

### Experiment 1k

The same experiment as described above (experiment 1i) was done, except now 464.0 µL Me₃-TACN was used. This led to a 1:10 molar ratio Mn:Me₃-TACN.

### Experiment 1l

55.7 mg Mn(OAc)₂.4H₂O and 47.4 µL Me₄-DTNE were dissolved in 5 mL propylene glycol. 400 µL of this solution was added to 5 g of alkyd resin and stirred manually. This led to a Mn level of 0.03wt% with respect to the solid resin and a 1:1 molar ratio Mn:Me₄-DTNE. The next day 150 mg of the resin solution was spread evenly on 10 cm² of a glass plate. Dryness of the film was determined every 30 minutes by running a needle through the film. 'Dry' was defined when the needle could no longer run through the film, but gave wrinkling of the film's surface.

### Experiment 1m

The same experiment as described above (experiment 1l) was done, except now 200 µL of the Mn(OAc)₂.4H₂O - Me₄-DTNE in propylene glycol solution was added to 5 g of alkyd resin. This led to a Mn level of 0.014wt% with respect to solid resin.

### Experiment 1n

The same experiment as described above (experiment 1l) was done, except now 100 µL of the Mn(OAc)₂.4H₂O - Me₄-DTNE in propylene glycol solution was added to 5 g of alkyd resin. This led to a Mn level of 0.007wt% with respect to solid resin.

### Experiment 1o

55.7 mg Mn(OAc)₂.4H₂O and 46.4 µL Me₃-TACN were dissolved in 5 mL 2-propanol. 200 µL of this solution was added to 5 g of alkyd resin and stirred manually. This led to a Mn level of 0.014wt% with respect to solid resin and a 1:1 molar ratio Mn:Me₃-TACN. The next day 150 mg of the resin solution was spread evenly on 10 cm² of a glass plate. Dryness of the film was determined every 30 minutes by running a needle through the film. 'Dry' was defined when the needle could no longer run through the film, but gave wrinkling of the film's surface.

### Experiment 1p

The same experiment as described above (experiment 1o) was done, except now ethanol was used as solvent instead of 2-propanol.

### Experiment 1q

The same experiment as described above (experiment 1o) was done, except now 1-propanol was used as solvent instead of 2-propanol.

### Experiment 1r

The same experiment as described above (experiment 1o) was done, except now iso-butanol was used as solvent instead of 2-propanol.

### Experiment 1s

The same experiment as described above (experiment 1o) was done, except now methanol was used as solvent instead of 2-propanol.

### Experiment 1t

The same experiment as described above (experiment 1o) was done, except now acetone was used as solvent instead of 2-propanol. It was observed that the Mn(OAc)₂.4H₂O - Me₃-TACN mixture in acetone gave a suspension.

### Experiment 1u

The same experiment as described above (experiment 1o) was done, except now 2-butanone was used as solvent instead of 2-propanol. It was observed that the Mn(OAc)₂.4H₂O - Me₃-TACN in 2-butanone gave a suspension.

### Experiment 1v

The same experiment as described above (experiment 1o) was done, except now glycerol was used as solvent instead of 2-propanol.

### Experiment 1w

The same experiment as described above (experiment 1o) was done, except now glycerol was used as solvent instead of 2-propanol and Mn(OAc)₂.4H₂O was replaced by 61.0 mg Mn(OAc)₃.2H₂O

### Experiment 1x

The same experiment as described above (experiment 1o) was done, except now 2-butanone was used as solvent instead of 2-propanol and Mn(OAc)₂.4H₂O was replaced by 61.0 mg Mn(OAc)₃.2H₂O. It was observed that the Mn(OAc)₃.2H₂O - Me₃-TACN in 2-butanone gave a suspension.

### Experiment 1y

Experiment 1o was repeated, except for use of 2-butanone as solvent instead of 2-propanol and replacement of Mn(OAc)₂.4H₂O with 45.0 mg MnCl₂.4H₂O. It was observed that the MnCl₂.4H₂O - Me₃-TACN in 2-butanone gave a suspension.

### Comparative experiment 2a

208.3 mg Mn(2-EH)₂ and 46.4 µL Me₃-TACN were dissolved in 5 mL Shellsol D60. 400 mg of this suspension was added to 5 g of alkyd resin and stirred manually. This led to a Mn level of 0.03wt% with respect to solid resin and a 1:1 molar ratio Mn:Me₃-TACN. The next day 150 mg of the resin solution was spread evenly on 10 cm² of a glass plate. Dryness of the film was determined every 30 minutes by running a needle through the film. 'Dry' was defined when the needle could no longer run through the film, but gave wrinkling of the film's surface.

### Comparative experiment 2b

The same experiment as described above (experiment 2a) was done, except now 200 mg of the Mn(2-EH)₂ - Me₃-TACN in propylene glycol solution was added to 5 g of alkyd resin. This led to a Mn level of 0.014wt% with respect to solid resin.

### Comparative experiment 2c

The same experiment as described above (experiment 2a) was done, except now 100 mg of the Mn(2-EH)₂ - Me₃-TACN in propylene glycol solution was added to 5 g of alkyd resin. This led to a Mn level of 0.007wt% with respect to solid resin.

### Comparative experiment 2d

The same experiment as described above (experiment 1a) was done, except without adding Mn salt and chelant to the 5 g of alkyd resin (blank, no drier added).

**Table 1 Drying times in hours. Chelant and level of manganese as compared to solid resin. Experiments 1a-1o were performed in propylene glycol as solvent and experiments 2a,2b,2c were done in Shellsol D60 solvent (reference). The reference experiment 2d (no drier added) did not lead to any drying of the film after 8 h.**

| Experiment Number | Mn source + chelant | 0.03wt % Mn | 0.014wt% Mn | 0.007wt% Mn |
|---|---|---|---|---|
| 1a, 1b, 1c | Mn(OAc)₂.4H₂O + Me₃-TACN | 2.9 | 2.4 | 3.7 |
| 1d, 1e, 1f | Mn(OAc)₃.2H₂O + Me₃-TACN | n/d | 2.0 | 2.8 |
| 1g | MnCl₂.4H₂O + Me₃-TACN | n/d | 2.0 | n/d |
| 1h | Mn(NO₃)₂.4H₂O + Me₃-TACN | n/d | 3.5 | n/d |
| 1l, 1m, 1n | Mn(OAc)₂.4H₂O + Me₄-DTNE | 3.6 | 3.7 | 5.9 |
| 2a, 2b, 2c | Mn(2-EH)₂ + Me₃-TACN | 2.4 | 2.7 | 3.5 |

**Table 2 Drying times in hours - variation in Mn:Me₃-TACN molar ratio. 0.007wt%Mn (as Mn(OAc)₂.4H₂O) with respect to solid resin was used in propylene glycol.**

| Experiment number | Mn:Me₃-TACN | Drying time (h) |
|---|---|---|
| 1c | 1:1 | 3.7 |
| 1i | 1:2 | 3.2 |
| 1j | 1:5 | 2.4 |
| 1k | 1:10 | 2.0 |

**Table 3 Drying times in hours - usage of different solvents. 0.014wt%Mn with respect to solid resin was used.**

| Experiment Number | Solvent | Mn(OAc)₂.4H₂O | Mn(OAc)₃.2H₂O | MnCl₂.4H₂O |
|---|---|---|---|---|
| 1b, 1e, 1g | propylene glycol | 2.4 | 2.0 | 2.0 |
| 1o | 2-propanol | 2.5 | n/d | n/d |
| 1p | ethanol | 2.5 | n/d | n/d |
| 1q | 1-propanol | 2.5 | n/d | n/d |
| 1r | Iso-butanol | 2.5 | n/d | n/d |
| 1s | methanol | 2.5 | n/d | n/d |
| 1t | acetone | 2.5 | n/d | n/d |
| 1u | 2-butanone | 2.8 | 3.2 | 2.5 |
| 1v | glycerol | 3.5 | 2.6 | n/d |

The results presented in the Tables above indicate that:
- using propylene glycol as solvent, a very good drying performance of mixtures of different manganese salts and Me₃-TACN chelant was observed. Similar drying activities using Mn(OAc)₂.4H₂O, Mn(OAc)₃.2H₂O MnCl₂.4H₂O with Me₃-TACN, whilst with Mn(NO₃)₂.4H₂O a slightly lower activity was observed.
- In the same solvent, using a molar excess of Me₃-TACN to Mn led to improved performance.
- Using Mn(OAc)₂.4H₂O and equimolar amounts of Me₃-TACN in different OH-containing or ketone-based solvents, yielded also good drying performance (Table 3).

## Claims

1. An oxidatively curable alkyd-based coating composition that has been contacted with a formulation obtainable by a method comprising contacting the following components:
(i) a manganese ion-containing salt, comprising a manganese ion having a valency of (II), (III) or (IV) and a counteranion selected from the group consisting of acetate, chloride, nitrate, formate, propionate, bromide, carbonate, acetylacetonate and sulfate;
(ii) a chelant of formula (I): 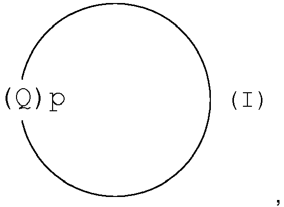 (wherein: 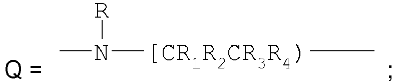
p is 3;
R is independently selected from the group consisting of hydrogen, C₁-C₂₄alkyl, CH₂CH₂OH, CH₂COOH and pyridine-2-ylmethyl; and
R₁, R₂, R₃, and R₄ are independently selected from H, C₁-C₄alkyl and C₁-C₄alkylhydroxy); and
(iii) an alcohol or a ketone,
the method not comprising contact of the mixture resultant from contacting of the salt, the chelant and the alcohol or the ketone with hydrogen peroxide or a source thereof.

2. The composition of claim 1, wherein the counteranion is selected from the group consisting of acetate, chloride and nitrate.

3. The composition of claim 1, wherein the counteranion is acetate.

4. The composition of claim 1, wherein the salt is selected from optionally hydrated Mn(II)(acetate)₂, Mn(II)Cl₂ and Mn(II)(NO₃)₂.

5. The composition of any one preceding claim, wherein manganese ions are present in the formulation in an amount of about 0.1 to about 10 wt%.

6. The composition of any one preceding claim, wherein each R group is the same C₁₋₂₄ alkyl.

7. The composition of any one preceding claim, wherein the chelant is 1,4,7-trimethyl-1,4,7-triazacyclononane.

8. The composition of any one preceding claim, wherein the formulation comprises an alcohol selected from the group consisting of methanol, ethanol, glycerol, 1-propanol, 2-propanol, 1-butanol, 2-butanol, 1,2-propyleneglycol and 1,3-propyleneglycol.

9. The composition of claim 8, wherein the alcohol is selected from the group consisting of ethanol, 1,2-propyleneglycol, 1,3-propyleneglycol and glycerol.

10. The composition of any preceding claim, wherein the formulation comprises a ketone selected from the group consisting of acetone and 2-butanone.

11. The composition of any one preceding claim, which is a paint.

12. The composition of any one preceding claim, which comprises between about 0.0001 and about 0.3 wt% manganese ions with respect to the weight of curable components in the composition.

13. A method comprising contacting an oxidatively curable alkyd-based coating composition with a formulation as defined in any one of claims 1 to 10.

14. An oxidatively curable coating composition as defined in any one of claims 1 to 12, or obtainable according to the method of claim 13, once cured.

15. A method comprising applying an oxidatively curable coating composition as defined in any one of claims 1 to 12, or obtainable according to the method of claim 13, to a substrate.

## Patentansprüche

1. Oxidativ härtbare, auf Alkyd basierende Beschichtungszusammensetzung, die mit einer Formulierung in Kontakt gebracht worden ist, welche mit Hilfe eines Verfahrens erhalten werden kann, umfassend das Kontaktieren der folgenden Komponenten:
(i) Mangan-Ionen enthaltendes Salz, umfassend ein Mangan-Ion, das eine Wertigkeit von (II), (III) oder (IV) aufweist, sowie ein Gegen-Anion, das ausgewählt ist aus der Gruppe bestehend aus Acetat, Chlorid, Nitrat, Formiat, Propionat, Bromid, Carbonat, Acetylacetonat und Sulfat;
(ii) einen Komplexbildner der Formel (I): 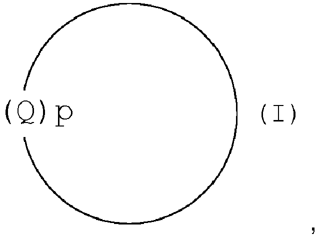 (worin: 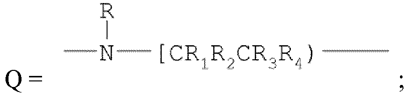
p 3 beträgt;
R unabhängig ausgewählt ist aus der Gruppe bestehend aus Wasserstoff, C₁-C₂₄-Alkyl, CH₂CH₂OH, CH₂COOH und Pyridin-2-ylmethyl; und
R₁, R₂, R₃ und R₄ unabhängig ausgewählt sind aus H, C₁-C₂₄-Alkyl und C₁-C₄-Alkylhydroxy); und
(iii) einen Alkohol oder ein Keton,
wobei das Verfahren nicht umfasst den Kontakt mit der Mischung, die aus dem Kontaktieren des Salzes, des Komplexbildners und des Alkohols oder des Ketons mit Wasserstoffperoxid oder einem Ausgangsstoff dafür resultiert.

2. Zusammensetzung nach Anspruch 1, wobei das Gegen-Ion ausgewählt ist aus der Gruppe bestehend aus Acetat, Chlorid und Nitrat.

3. Zusammensetzung nach Anspruch 1, wobei das Gegen-Ion Acetat ist.

4. Zusammensetzung nach Anspruch 1, wobei das Salz ausgewählt ist aus wahlweise hydratisiertem Mn(II)-(acetat)₂, Mn(II)Cl₂ und Mn(II)(NO₃)₂.

5. Verfahren nach einem der vorgenannten Ansprüche, wobei Mangan-Ionen in der Formulierung in einer Menge von etwa 0,1 bis etwa 10 Gew.% vorhanden sind.

6. Verfahren nach einem der vorgenannten Ansprüche, wobei jede R-Gruppe das gleiche C₁₋₂₄-Alkyl ist.

7. Verfahren nach einem der vorgenannten Ansprüche, wobei der Komplexbildner 1,4,7-Trimethyl-1,4,7-triazacyclononan ist.

8. Verfahren nach einem der vorgenannten Ansprüche, wobei die Formulierung einen Alkohol umfasst, der ausgewählt ist aus der Gruppe bestehend aus Methanol, Ethanol, Glycerin, 1- Propanol, 2-Propanol, 1-Butanol, 2-Butanol, 1,2-Propylenglykol und 1,3-Propylenglykol.

9. Zusammensetzung nach Anspruch 8, wobei der Alkohol ausgewählt ist aus der Gruppe bestehend aus Ethanol, 1,2-Propylenglykol, 1,3-Propylenglykol und Glycerin.

10. Zusammensetzung nach einem der vorgenannten Ansprüche, wobei die Formulierung ein Keton umfasst, das ausgewählt ist aus der Gruppe bestehend aus Aceton und 2-Butanon.

11. Zusammensetzung nach einem der vorgenannten Ansprüche, die ein Anstrichmittel ist.

12. Zusammensetzung nach einem der vorgenannten Ansprüche, die in Bezug auf das Gewicht härtbarer Komponenten in der Zusammensetzung zwischen etwa 0,0001% und etwa 0,3 Gew.% Mangan-Ionen aufweist.

13. Verfahren, umfassend das Kontaktieren einer oxidativ härtbaren, auf Alkyd basierenden Beschichtungszusammensetzung mit einer Formulierung nach einem der Ansprüche 1 bis 10.

14. Oxidativ härtbare Beschichtungszusammensetzung nach einem der Ansprüche 1 bis 12, oder die erhalten werden kann nach dem Verfahren nach Anspruch 13, sobald gehärtet.

15. Verfahren, umfassend das Auftragen einer oxidativ härtbaren Beschichtungszusammensetzung nach einem der Ansprüche 1 bis 12, oder die erhalten werden kann nach dem Verfahren nach Anspruch 13, auf ein Substrat.

## Revendications

1. Composition de revêtement à base d'alkyde durcissable par oxydation qui a été mise en contact avec une formulation pouvant être obtenue par une méthode comprenant la mise en contact des composants suivants:
(i) un sel contenant un ion de manganèse, comprenant un ion de manganèse possédant une valence de (II), (III) ou (IV) et un contre-anion choisi dans le groupe constitué de: acétate, chlorure, nitrate, formate, propionate, bromure, carbonate, acétylacétonate et sulfate;
(ii) un chélateur de la formule (I): 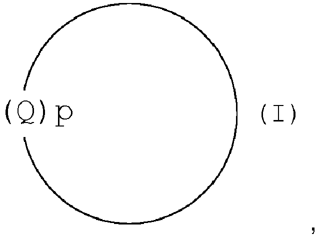 (dans laquelle: 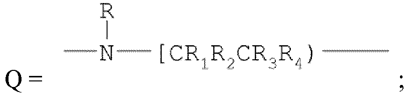
p est 3;
R est indépendamment choisi dans le groupe constitué de: un hydrogène, un C₁-C₂₄ alkyle, CH₂CH₂OH, CH₂COOH et un pyridine-2-ylméthyle; et
R₁, R₂, R₃ et R₄ sont indépendamment choisis parmi H, un C₁-C₄ alkyle et un C₁-C₄ alkylhydroxy); et
(iii) un alcool ou une cétone,
la méthode ne comprenant pas le contact du mélange résultant de la mise en contact du sel, du chélateur et de l'alcool ou de la cétone avec du peroxyde d'hydrogène ou une source de celui-ci.

2. Composition selon la revendication 1, dans laquelle le contre-anion est choisi dans le groupe constitué de: acétate, chlorure et nitrate.

3. Composition selon la revendication 1, dans laquelle le contre-anion est un acétate.

4. Composition selon la revendication 1, dans laquelle le sel est choisi parmi Mn(II)(acétate)₂, Mn(II)Cl₂ et Mn(II)(NO₃)₂ optionnellement hydraté.

5. Composition selon l'une quelconque des revendications précédentes, dans laquelle les ions de manganèse sont présents dans la formulation dans une quantité d'environ 0,1 à environ 10% en poids.

6. Composition selon l'une quelconque des revendications précédentes, dans laquelle chaque groupe R est le même C₁₋₂₄ alkyle.

7. Composition selon l'une quelconque des revendications précédentes, dans laquelle le chélateur est le 1,4,7-triméthyl-1,4,7-triazacyclononane.

8. Composition selon l'une quelconque des revendications précédentes, dans laquelle la formulation comprend un alcool choisi dans le groupe constitué de: méthanol, éthanol, glycérol, 1-propanol, 2-propanol, 1-butanol, 2-butanol, 1,2-propylèneglycol et 1,3-propylèneglycol.

9. Composition selon la revendication 8, dans laquelle l'alcool est choisi dans le groupe constitué de: éthanol, 1,2-propylèneglycol, 1,3-propylèneglycol et glycérol.

10. Composition selon l'une quelconque des revendications précédentes, dans laquelle la formulation comprend une cétone choisie dans le groupe constitué de: acétone et 2-butanone.

11. Composition selon l'une quelconque des revendications précédentes, qui est une peinture.

12. Composition selon l'une quelconque des revendications précédentes, qui comprend entre environ 0,0001 et environ 0,3% en poids d'ions de manganèse par rapport au poids de composants durcissables dans la composition.

13. Méthode comprenant la mise en contact d'une composition de revêtement à base d'alkyde durcissable par oxydation avec une formulation telle que définie dans l'une quelconque des revendications 1 à 10.

14. Composition de revêtement durcissable par oxydation telle que définie dans l'une quelconque des revendications 1 à 12 ou pouvant être obtenue selon la méthode de la revendication 13, une fois durcie.

15. Méthode comprenant l'application d'une composition de revêtement durcissable par oxydation telle que définie dans l'une quelconque des revendications 1 à 12, ou pouvant être obtenue selon la méthode de la revendication 13, sur un substrat.
